# EUROPEAN PATENT APPLICATION

(11) **EP 4 776 378 A1**
(43) Date of publication of application: **15.07.2026**
(21) Application number: 25150982.4
(22) Date of filing: 09.01.2025
(51) Int. Cl.: H01M 10/42, H01M 10/48

(54) **MONITORING SYSTEM FOR MONITORING A BATTERY AND METHOD**

(71) Applicant: ABB SCHWEIZ AG, 5400 Baden (CH)
(72) Inventor: HE, Minglong, 4310 Rheinfelden (CH); MARIUCCI, Giacomo, 6900 Lugano (CH)
(74) Representative: Maiwald GmbH

(57) **Abstract**

The invention relates to a monitoring system (500) for monitoring a battery comprising a battery monobloc (108). The monitoring system comprises a multi-sensing visual device (100) attachable to a housing (104) of the battery monobloc. The multi-sensing visual device is configured to measure a plurality of characteristics relating to the battery monobloc, and to indicate the plurality of measured characteristics optically.

## Description

### Technical Field

The invention relates to a monitoring system for monitoring a battery monobloc, a battery storage arrangement for a battery arrangement, a method for monitoring a battery arrangement, and a use of a self-standing film, a self-standing sticker, and/or a coating layer as multi-sensing visual device in a monitoring system.

### Background

Lead acid and Ni-Zn battery-based UPS systems typically use less sophisticated battery management systems compared to Li-ion battery-based systems and are often lacking the monitoring of battery cells and battery monoblocs. When incidents and failures occur, it is time consuming and expensive to investigate the root causes. The abnormal cells could lead to the failure of the whole battery cabinet and the potential hazards remain after the failure. Due to the missing information of the battery status, it is difficult to understand the correct procedures for dealing with damaged battery rack in a post-fire incident.

### Summary of the Invention

There may be a desire to provide a monitoring system for batteries, e.g., aqueous-based batteries such as lead acid and Ni-Zn batteries.

The problem is solved by the subject-matter of the independent claims. Embodiments are provided by the dependent claims, the following description and the accompanying figures.

The described embodiments similarly pertain to the monitoring system for monitoring a battery monobloc, the battery storage arrangement for a battery arrangement, the method for monitoring a battery arrangement, and the use of a self-standing film, a self-standing sticker, and/or a coating layer as multi-sensing visual device in a monitoring system. Synergetic effects may arise from different combinations of the embodiments although they might not be described in detail.

Further on, it shall be noted that all embodiments of the present invention concerning a method might be carried out with the order of the steps as described, nevertheless this has not to be the only and essential order of the steps of the method. The herein presented methods can be carried out with another order of the disclosed steps without departing from the respective method embodiment, unless explicitly mentioned to the contrary hereinafter.

Technical terms are used by their common sense. If a specific meaning is conveyed to certain terms, definitions of terms will be given in the following in the context of which the terms are used.

According to a first aspect, a monitoring system for monitoring a battery arrangement comprising a battery monobloc is provided. The monitoring system comprises a multi-sensing visual device attachable to a housing of the battery monobloc; wherein the multi-sensing visual device is configured to measure a plurality of characteristics relating to the battery monobloc, and to indicate the plurality of measured characteristics optically.

The monitoring system itself according to this aspect does not include the battery monobloc but consists basically of the multi-sensing visual device according to this aspect.

The expression "characteristics relating to the battery monobloc" is used to describe that, precisely said, the characteristics may also comprise parameters that are sensed at the surface of the battery monobloc, including, for example the environmental air near the surface, which is in contact with the multi-sensing visual device.

The term "multi-sensing" relates to the capability of the multi-sensing device to sense multiple characteristics of the batteries.

According to a second aspect, a monitoring system for monitoring an arrangement of batteries comprising a plurality of battery monoblocs in a battery storage arrangement is provided. The monitoring system comprises a plurality of multi-sensing visual devices, each of which is associated with one of the plurality of battery monoblocs and is attachable to a housing of the battery storage arrangement.

Each of the multi-sensing visual devices is configured to measure a plurality of characteristics relating to one of the plurality of battery monoblocs, and to indicate the plurality of measured characteristics optically.

The difference between the two aspects is that according to the second aspect, a plurality of battery monoblocs is monitored by a corresponding plurality of multi-sensing visual devices, and that the multi-sensing visual devices are attachable to the housing of a battery storage arrangement instead to a battery monobloc.

Of course, also the first aspect allows to have a battery storage arrangement including a plurality of battery monoblocs, where a plurality of multi-sensing visual devices are attachable to a respective associated battery monobloc. The term "associated" means a one-to-one correspondence between a battery monobloc and a multi-sensing visual device that monitors the battery monobloc.

In this disclosure, the terms "battery monobloc" and "plurality of battery monoblocs," that are arranged in a battery storage arrangement are also combined to form the term "battery arrangement". Therefore, "battery arrangement" addresses both, a single battery monobloc and the said plurality of battery monoblocs. A battery monobloc comprises one or more battery cells or "batteries" and has a housing.

In embodiments, the multi-sensing visual device does either not comprise electronic components or comprises only a few electronic devices for measurement that cannot be measured purely mechanically, physically or chemically without electronics, or that could only be measured purely mechanically, physically or chemically with high effort. That is, the characteristics of the battery arrangement may be measured chemically, mechanically and/or physically preferably without using a power supply or any electronic circuit and may be indicated without using an electronic device such as a display. Preferably, the support material of the multi-sensing visual device is based on paper and/or plastic or on another suitable material. For example, the support material is a flat nylon net forming a strip that includes paper, which is prepared to be chemically sensitive.

As defined above, the battery arrangement may be a battery monobloc or may include a cluster of battery monoblocs. The housing of the battery arrangement may therefore be the housing of a single battery monobloc, or a housing of the cluster, which may be, for example, a cabinet or rack where the monoblocs are hold by or mounted to the structure of the cabinet or rack, respectively, or simply an enclosure containing the battery monoblocs.

The term "visual" means that the result of the measurements can be read optically, e.g. coded by a color, a turbidity, a pattern, a scale, a brightness, a number, a text, a movable bar, or similar.

"Attachable" means that the multi-sensing visual device may preferably be glued on or sticked to the housing, but also other fixing methods may be used as applicable. For example, if the multi-sensing visual device comprises a holder or is slid into a holder, and the housing of the battery arrangement is a cabinet, the holder may also be screwed to the cabinet. Optionally, the housing may comprise a structure to receive the multi-sensing visual device or the holder of the multi-sensing visual device. In case of the second aspect, the multi-sensing visual device may be attached at a position inside the battery storage arrangement, e.g. at the inner side of a door of a cabinet.

The term "monitoring" relates to continuously and/or repeatedly measuring and optically indicating the results. The results may be directly optically indicated to a user or an operator, or the optical indication may be sensed by an optical sensor such as a camera, so that a user can be informed indirectly about the single results or an evaluated or processed result, for example, a summary of the single results. Embodiments where an optical sensor is used are described further below.

In this way, a low-cost monitoring system for monitoring and recording especially lead acid and Ni-Zn UPS battery operation history and for interpreting the actual battery status is provided.

According to an embodiment, the characteristics of the one battery monobloc or the plurality of battery monoblocs are represented by diagnostic parameters for diagnosing the condition of one or more battery monoblocs.

In other words, the objective of the monitoring is to monitor the condition of the battery. For that, suitable parameters for ddiagnosing purposes are used that can be measured.

According to an embodiment, the multi-sensing visual device is a self-standing film, a self-standing sticker, and/or a coating layer.

The logistic effort for providing such a multi-sensing visual device is therefore low, the multi-sensing visual device is inexpensive, may be in parts readily available on the market, and is easily attachable but has nevertheless a great effect regarding the safe operation and storage of batteries.

According to an embodiment, the multi-sensing visual device comprises a plurality of monitoring blocks corresponding to the measured parameters for indicating the one or more measured characteristics.

Monitoring blocks may also be regarded as individual areas of the multi-sensing visual device, each of which is suitable for measuring a specific characteristic of the associated battery monobloc.

According to an embodiment, the plurality of measured characteristics is any combination of two or more of the following chemical characteristics and physical characteristics:
- Zn concentration,
- Oxygen evolution of oxygen which results from side reactions: presence of H₂ and/or whether an O₂ content is higher than typical content in air,
- humidity,
- pH value,
- lead concentration,
- nickel concentration,
- presence of different crystals, which are typically white in colour, and which result from side reactions or are dried out of electrolyte, for example: lead sulphate in lead acid batteries, or potassium carbonate crystals, zinc-based crystals, nickel-based crystals in Ni-Zn batteries. Examples are: white and powdery carbonate (K₂CO₃) as reaction of KOH with CO₂ from air; white or yellowish zinc oxide (ZnO) resulting from Zinc electrode degradation; white Zinc hydroxide (Zn(OH)₂) resulting from localized reactions with OH⁻ ions; crystalline potassium zincate (K₂Zn(OH)₄) resulting from a combination of zinc and alkaline ions, nickel Hydroxide (Ni(OH)₂), where nickel compounds often have different colours, such as Ni(OH)₂ with a green colour and NiO(OH) with a brown or black colour,
- maximal battery temperature, and
- deformation of a housing of a battery monobloc.

Expressed in other words, the number of monitoring blocks is at least two. The monitoring blocks are therefore configured to record at least two different battery information regarding the state that the battery undergoes. The list given in this embodiment comprises possible characteristics detectable by monitoring blocks contained in the visual device. Therefore, the visual device contains at least two monitoring blocks, where each of the monitoring blocks measures and indicates one of the characteristics listed above, and each monitoring block differs from other monitoring blocks.

The chemical parameters may be measured, for example, by analysing liquid or gases escaping from the battery monobloc. Physical parameters such the extent of cell swelling, humidity, or temperature may be measured, for example, preferably mechanically or by using simple electronic circuits, or by using chemical detectors where appropriate. The maximum temperature may be the highest temperature that has been reached since start of the measurement with the respective monitoring block. Other solutions are possible.

According to an embodiment, the monitoring system further comprises an optical system with a transmitter, and a processing device. The optical system is configured to capture images of the multi-sensing visual device and to transmit the images of the captured monitoring blocks to the processing device using the transmitter, and the processing device is configured to receive and to evaluate the images with respect to the plurality of characteristics of a battery monobloc.

The electrical optical system may be, for example, a camera or an electrical optical sensor in general. The evaluation is based on the plurality of characteristics of a battery monobloc visible on the image. That is, the processing device uses all characteristics, not a single one, to determine the condition to the battery monobloc. The transmitter may be a wired or wireless transmitter that preferably transmits the image data according to a standard protocol.

According to an embodiment, the monitoring system further comprises a controller. The processing device is configured to create a command or signal based on the evaluation and send the command or signal to the controller for causing an output action or a control action for at least one battery monobloc by the controller.

Expressed the other way round, the controller is configured to perform an output action or a control action for at least one battery monobloc triggered by a command or signal received from the processing device.

Depending on the type of controller, for example a digital or an analog type, the processing device sends a command or signal to the controller. The controller may be, for example, a driver that generates a signal for an output device that generates an optical or acoustical alarm or a message to an operator, herein also referred to as "output action", or a switch to disconnect one or several battery monoblocs or takes any other action if the evaluation has revealed that, for example, a threshold has been exceeded or a certain status level has been reached. The monitoring system may further comprise a storage for recording any data, e.g. raw data, evaluation results, etc. The stored historic data may be used, for example, for documentation purposes, or as input for estimating the status of battery monoblocs or for predicting the status of battery monoblocs. The processing device may also use the evaluation results to indicate maintenance measures.

The evaluation may be performed using a software running on a processor that is capable of relating, for example a colour, a dimension, a pattern or any other optical indicator to a value. The value might be a value indicating quantitatively the measured characteristic, e.g. a ph-value, a temperature, a concentration of a substance, etc. or it might be a binary value or a value having discrete levels indicating "ok", "warning", "not ok", "danger", etc. Furthermore, the evaluation may comprise the step applying an algorithm and/or an artificial intelligence to determine a state of the battery based on a function that depends on variables representing the evaluated measured characteristics. That is, the state of a battery monobloc is determined based on the combination of the measured characteristics represented by the evaluated parameters, and also a prediction of the state or the behaviour of the battery monoblocs may be performed by the combination of these parameters.

According to an embodiment, wherein the one or more battery monoblocs comprise aqueous-based batteries, preferably Ni-Zn or lead acid batteries (108), for Uninterruptable Power System, UPS, Energy Storage System, ESS, or Battery Energy Storage System, BESS, applications.

According to a further aspect, a battery storage arrangement for a battery arrangement comprising a monitoring system as disclosed herein is provided.

The battery arrangement may be a battery arrangement for a UPS-, ESS-, or BESS-cabinet.

At least for some types of the above-mentioned characteristics, the multi-sensing visual device does not necessarily have to be attached directly to the battery. This applies, for example, to temperature or air humidity near the battery monobloc, or to the concentration of gas particles.

According to an embodiment, the battery storage arrangement has a door and/or a wall comprising one or more windows to provide visibility of the multi-sensing visual devices.

There may be a single window that is large enough to provide the visibility of all multi-sensing visual devices, or there may be several windows, where each window provides visibility to one or more multi-sensing visual devices. Alternatively or additionally, the sides may be open so that the multi-sensing visual devices are visible. The open areas are also defined here as "windows". Alternatively, or additionally the multi-sensing visual devices are attached to the housing of the battery monoblocs and are visible when opening the door. There may be also other solutions such as movable side walls or parts of a side wall.

According to a further aspect, a method for monitoring a battery arrangement is provided. The method comprises the following steps:
providing a monitoring system with a multi-sensing visual device as described herein, attaching the multi-sensing visual device to a housing of the battery arrangement, measuring, by the multi-sensing visual device, a plurality of characteristics of the battery arrangement, and indicating, by the multi-sensing visual device, the measured characteristics optically.

The battery arrangement may consist of one or a plurality of battery monoblocs.

According to an embodiment, the method comprises further the steps: capturing, by an optical device, images of the multi-sensing visual device, and transmitting the images of the captured monitoring blocks to a processing device; receiving, by the processing device, the images of the captured monitoring blocks, evaluating the images with respect to the characteristics of a battery monobloc, creating a command or signal based on the evaluation, and sending the command or signal to a controller and causing an output action or a control action for at least one battery monobloc.

The evaluation is based on combining the characteristics of the at least two monitoring blocks.

The evaluation may further comprise the step: interpreting or estimating the actual battery status. The interpretation of the actual battery status may include categorizing the status into a status level, such as ok, warning, not ok, danger, etc.

The evaluation may further comprise the step: Predicting the status of the battery.

The interpretation and prediction of the status may be performed using algorithms, which may also include machine learning models and algorithm using neuronal networks.

According to an embodiment, the method further comprises the step: recording battery operation history of a battery monobloc.

The battery operation history may include the raw data or the evaluation results of the measurements.

That is, workflows for fast diagnostic and battery sorting may be defined and executed via combing all parameters from different monitoring blocks to evaluate the battery status and conditions. The recording of battery operation history may allow to use older values of the parameters for interpretation of the values, a comparison of the values of the parameters between different battery monoblocs, where deviations may indicate a poor status of a battery monobloc, and for prediction of the status. Furthermore, the recording of the battery operation history and indicating the battery status, allows for a predictive maintenance before incidents and troubleshooting after incidents. Thus, safety and reliability of battery storage arrangements such as UPS cabinets are improved.

According to a further aspect, a use of a self-standing film, a self-standing sticker, and/or a coating layer as multi-sensing visual device, e.g. in a monitoring system as described herein, for monitoring a battery arrangement is provided.

These and other features, aspects and advantages of the present invention will become better understood with reference to the accompanying figures and the following description.

### Short Description of the Figures

Fig. 1 shows a diagram illustrating the chemical background of a Ni-Zn battery.
Fig. 2 shows a diagram of a monitoring system with a multi-sensing visual device.
Fig. 3 shows a diagram of a battery monobloc with a multi-sensing visual device.
Fig. 4a shows a first diagram of a cabinet with multi-sensing visual devices.
Fig. 4b shows a second diagram of a cabinet with multi-sensing visual devices.
Fig. 4c shows a third diagram of a cabinet with multi-sensing visual devices.
Fig. 5 shows a further diagram of a monitoring system.
Fig. 6 shows a flow diagram of a method for monitoring a battery arrangement.

### Detailed Description of Embodiments

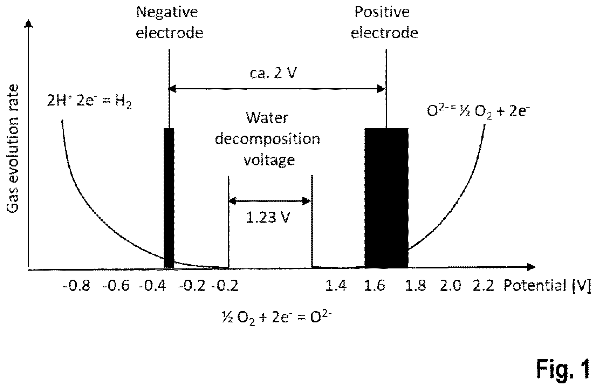

Corresponding parts are provided with the same reference symbols in all figures. Fig. 1 shows a diagram illustrating the chemical background of a Ni-Zn battery. During discharge of a battery Zn + 2OH⁻ react to ZnO + H₂O + 2e-; and NiOOH + H₂O + e⁻ react to Ni(OH)₂ + OH⁻, so that the overall chemical reaction can be written as Zn + NiOOH + H₂O 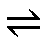 ZnO + 2Ni(OH)₂. The involved components allow a parasitic reaction where water reacts with Zn resulting in Zn(OH) ₂ and H₂. Further, between the two negative electrode and the positive electrode a potential of ~2.0 V exists, which is higher than the water decomposition voltage of 1.23 V. The water decomposition results in H₂ and O₂, i.e. an oxygen atom with two additional electrons. The H₂ molecules can react with the O₂ atoms in an exotherm reaction.

There are several physical or chemical parameters that indicate the risk or the progress of such a reaction, or the damage already caused by the reaction. These parameters can be measured and indicated. For example, the following parameters can be measured: Maximal battery temperature, Battery swelling, Zn concentration indicating the Zn dissolution and H₂ evolution, H₂ detection, humidity, and/or pH value, and in case of Ni-Zn batteries lead concentration indicating the lead dissolution and water electrolysis and Nickel concentration. The list is not limited to these parameters.

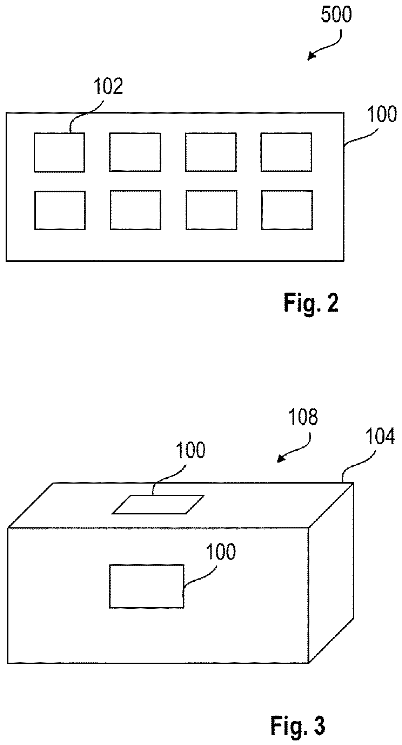

Fig. 2 shows a diagram of a monitoring system 500 for a battery arrangement according to an embodiment. The monitoring system 500 comprises a multi-sensing visual device 100 such as a self-standing film or sticker or coating layer that contains one or more monitoring blocks 102. The multi-sensing visual device 100 may therefore include different monitoring blocks 102 that record different battery information such as the maximal temperature that the battery monobloc undergoes, the extent of cell swelling or any other parameters as listed above. The chemical parameters Such as Zn concentration indicate the Zn dissolution and H₂ evolution, the lead concentration indicates the lead dissolution and water electrolysis.

The Zn concentration, lead concentrations, nickel concentration, pH value and further parameters may be determined using conventional test strips or patches that change their colour depending on the respective concentration. Similarly, hydrogen H₂ may be detected by a tape that may be based on silicone applied on a polyimide film. Humidity may be detected mechanically, physically by measuring a temperature difference with mercury thermometers, one of which has a wet bulb and the other a dry bulb, or digitally using a battery driven electrical circuit.

The monitoring blocks 102 in Fig. 2 are illustrated as blocks arranged matrix-like and with the same size. However, the real arrangement and size of the monitoring blocks 102 depends on the type of measurements and the realization. For example, if battery driven sensors are used, more space in three dimensions is required than for a field of a chemical detection strip for, e.g., detecting a ph-value. The multi-sensing visual device may furthermore consist of several separate parts that are not connected to each other.

Fig. 3 shows a diagram of a battery monobloc 108. A multi-sensing visual device 100, which represents a monitoring system 500, is attached to the battery monobloc housing 104 of the battery monobloc 108. In this basic example, the battery arrangement 108 includes only one battery monobloc 108. The shape of the multi-sensing visual device 100 depends on the type of intended measurements and the detector types. Preferably, the structure and design of the multi-sensing visual device 100 is simple, inexpensive and easy to install. For example, it is a self-adhesive film.

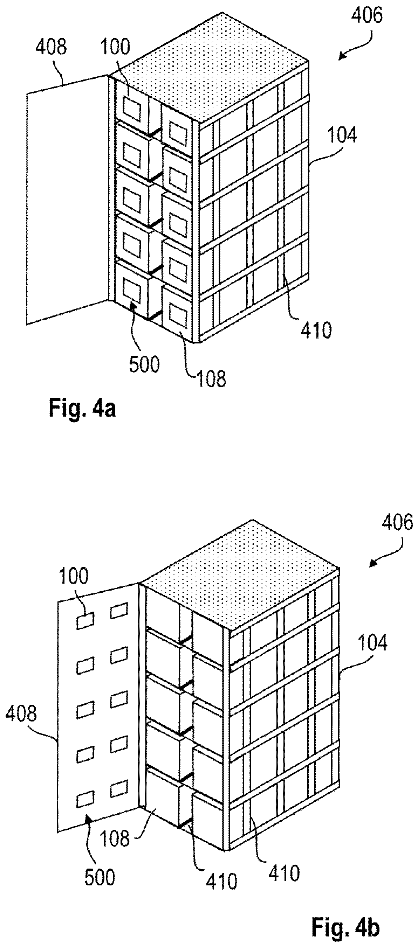

Fig. 4a shows a battery storage arrangement 406 in form of a UPS cabinet 406 with a housing 404, an internal support structure 410 for receiving or holding battery monoblocs 108 and stabilizing the housing 104, and a plurality of battery monoblocs 108 held by the internal support structure 410. The internal support structure 410 may include for example several trays, each for receiving several battery monoblocs 108.

The multi-sensing visual devices 100 forming the monitoring system 500 are attached visible to the battery monoblocs 108. The door 408 of the cabinet 406 may have windows so that the multi-sensing visual devices can be monitored even when the door is closed. The multi-sensing visual devices 100 may be permanently or removable attached to the battery monobloc housing 404 or UPS cabinet housing 404.

As shown in Fig. 4b, the multi-sensing visual devices 100 forming the monitoring system 500 can also be attached to the housing 404 of a UPS cabinet 406, preferably inside the UPS cabinet. In the example of Fig. 4b, the multi-sensing visual devices 100 are attached to the door 408 on the inside the cabinet 406. The multi-sensing visual devices 100 are arranged such that they are close to the battery monoblocs 108 or even touch the battery monoblocs 108 when the door 408 is closed.

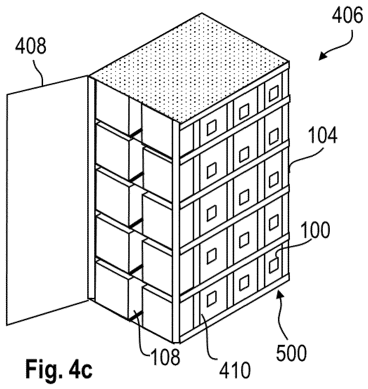

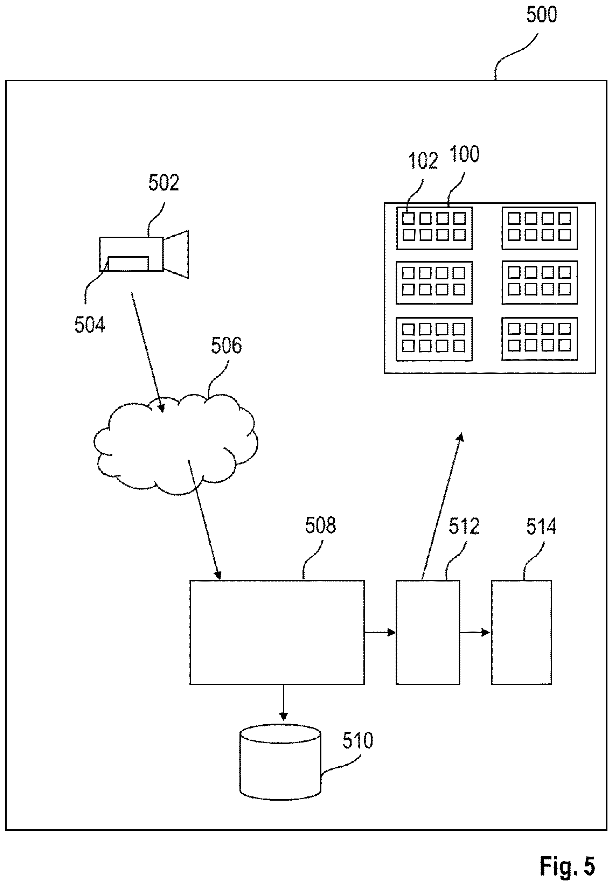

Alternatively, as shown in the example of Fig. 4c, the multi-sensing visual devices 100 may be attached at the sides, e.g. left and right side from view of the door, of the battery storage system 406 or the battery monoblocs 108. Options to monitor the monitoring blocks 108 are, for example, to have windows, here, in the side walls of the cabinet 406 such that the multi-sensing visual devices 100 are visible from the outside, or to have an optical system 502, e.g. optical sensors, that detect the battery monoblocs 108 and a transmitter 504 to transmit the captured optical information to a processing device 508 as proposed in Fig. 5. If the cabinet 406 has no open sides or windows, a light source may be used to support the optical capturing.

Fig. 5 shows a diagram of an extended monitoring system 500. The extended monitoring system 500 may further comprise an optical system 502 such as a camera 502 with a transmitter 504 connected wired or wirelessly to a data network 506 or cloud 506 and processing devices 508, or to an analysing system including the camera 502 and a processing device 508. The camera 502 may capture images of the multi-sensing visual device(s) 100 and send the images to the processing device 508 that interprets the image for evaluating the different monitoring blocks 102. The monitoring system 500 may further comprise a controller 512. The processing device 508 and/or the controller 512 may create a message, start an optical or acoustical alarm using output device 514, e.g. a lamp or a loudspeaker, disconnect one or several batteries as indicated by the arrow, or take any other or further action if the evaluation has revealed that, for example, a threshold has been exceeded or a certain status level has been reached. The monitoring system shown in Fig. 5 further comprises a storage 510 for recording any data, e.g. raw data, evaluation results, etc. The stored historic data may be used, for example, for documentation purposes, or as input for estimating the status of battery monoblocs 108 or for predicting the status of battery monoblocs 108. The processing device 508 may also use the evaluation results to indicate maintenance measures.

The processing device 508 may comprise a processor and a memory for storing data and a computer program, which, when running on the processor causes the controller to perform the method steps as indicated above to be performed by the controller. Further, the monitoring system may comprise a program storage medium on which the program is stored. The controller may consist of analog and/or digital circuits adapted to perform the actions as indicated in this disclosure.

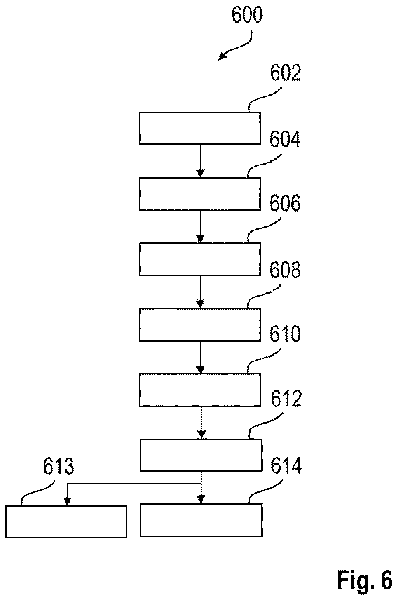

Fig. 6 shows a flow diagram of a method 600 for monitoring a battery arrangement 108. comprising the steps: providing 602 a monitoring system 500 as described herein, attaching 604 the multi-sensing visual device 100 to a housing 104 of a battery arrangement, measuring 606, by the multi-sensing visual device the plurality of characteristics of the battery arrangement; and indicating 608 the measured characteristics optically. Further steps include evaluating the status and / or condition of the battery arrangement 108 or individual battery monoblocs 108 of the battery arrangement 108.

Furthermore, the following steps may be performed:
By an optical device: capturing 610 images of the multi-sensing visual device 100, and transmitting the images of the captured monitoring blocks 102 to a processing device 508.

By the processing device 508: receiving 612 the images of the captured monitoring blocks 102, evaluating the images with respect to the characteristics of a battery monobloc 108, creating a command or signal based on the evaluation, and sending the command or signal to a controller.

By the controller: performing 614 an output action or a control action for at least one battery monobloc 108 such as outputting an optical or acoustical alarm signal, switching off, i.e. disconnecting, a battery monobloc or the complete battery arrangement, etc.

Some of the steps may be performed conditionally. E.g., the creation of a command or signal based on the evaluation, and sending the command or signal to a controller action may only be sent, if e.g., the result of the evaluation has revealed that a warning level has been exceeded. Several warning levels may be defined leading to different actions.

Moreover, the method 600 may comprise additionally the step: recording 613 battery operation history. The battery operation history may include the raw data or the evaluation results of the measurements. The steps of the method 600 as listed above may be performed in another order. Some steps may be performed in parallel. This step may also be performed after step 610. The operation history may also be used, for example, as input to a AI model for estimating and/or predicting the state of a battery monobloc.

### Acronyms

- AI: Artificial Intelligence
- ESS: Energy Storage System
- BESS: Battery Energy Storage System
- UPS: Uninterruptable Power System

### Reference Numerals

- 100: multi-sensing visual device
- 102: single monitoring block / pad of the multi-sensing visual device
- 104: housing of the of the battery monobloc
- 108: battery arrangement, battery monobloc(s)
- 404: housing of the of the battery arrangement
- 406: battery storage arrangement, e.g., UPS cabinet
- 408: door of cabinet
- 410: internal support structure
- 500: monitoring system
- 502: camera, optical system
- 504: Transmitter of optical system
- 506: cloud, data network
- 508: processing device
- 510: storage device, database
- 512: controller
- 514: output device
- 600: method for monitoring a battery arrangement
- 602-614: method steps

## Claims

1. Monitoring system (500) for monitoring a battery comprising a battery monobloc (108), comprising a multi-sensing visual device (100) attachable to a housing (104) of the battery monobloc (108);
wherein the multi-sensing visual device (100) is configured to measure a plurality of characteristics relating to the battery monobloc (108), and to indicate the plurality of measured characteristics optically.

2. Monitoring system (500) for monitoring an arrangement of batteries comprising a plurality of battery monoblocs (108) in a battery storage arrangement (406), comprising
a plurality of multi-sensing visual devices (100), each of which is associated with one of the plurality of battery monoblocs (108) and is attachable to a housing (404) of the battery storage arrangement (406); wherein each of the multi-sensing visual devices (100) is configured to measure a plurality of characteristics relating to one of the plurality of battery monoblocs (108) and to indicate the measured characteristics optically.

3. Monitoring system (500) according to claim 1 or 2, wherein the characteristics of the one battery monobloc (108) according to claim 1 or the plurality of battery monoblocs (108) according to claim 2 are diagnostic parameters for diagnosing the condition of one battery monobloc (108) according to claim 1 or a plurality of battery monoblocs (108) according to claim 2.

4. Monitoring system (500) according to any one of claims 1 to 3, wherein the multi-sensing visual device is a self-standing film, a self-standing sticker, and/or a coating layer.

5. Monitoring system (500) according to claim 3 or 4, wherein the multi-sensing visual device (100) comprises a plurality of monitoring blocks (102) corresponding to the plurality of measured characteristics for indicating the measured characteristics.

6. Monitoring system (500) according to any one of the previous claims, wherein the plurality of measured characteristics are any combination of two or more of the following chemical characteristics and physical characteristics: Zn concentration, presence of H₂, O₂ content higher than typical content in air, humidity, pH value, lead concentration, Nickel concentration, presence of lead sulphate crystals, potassium carbonate crystals, zinc-based crystals, nickel-based crystals, maximal battery temperature, deformation of a housing of a battery monobloc (108).

7. Monitoring system (500) according to any one of the previous claims, further comprising
an optical system (502) with a transmitter (504), and
a processing device (508),
wherein the optical system (502) is configured to capture images of the multi-sensing visual device (100) and to transmit the images of the captured monitoring blocks (102) to the processing device (508) using the transmitter (504), and the processing device (508) is configured to receive and to evaluate the images with respect to the plurality of characteristics of a battery monobloc (108).

8. Monitoring system (500) according to any one of the previous claims, wherein the monitoring system further comprises a controller (512), wherein the processing device (508) is configured to create a command or signal based on the evaluation and send the command or signal to the controller (512) for causing an output action or a control action for at least one battery monobloc (108) by the controller (512).

9. Monitoring system (500) according to any one of the previous claims, wherein the battery monobloc according to claim 1 or the plurality of battery monoblocs according to claim 2 comprise aqueous-based batteries, preferably Ni-Zn or lead acid batteries (108), for Uninterruptable Power System, UPS, Energy Storage System, ESS, or Battery Energy Storage System, BESS, applications.

10. Battery storage arrangement (406) for a battery arrangement (108) comprising a monitoring system (500) according to any one of the claims 1 to 9.

11. Battery storage arrangement (406) according to claim 10, wherein the battery storage arrangement (406) has a door (408) and/or a wall comprising one or more windows to provide visibility of the multi-sensing visual devices (100).

12. Method for monitoring a battery arrangement, comprising the steps:
providing (602) a monitoring system (500) comprising a multi-sensing visual device (100) according to claim 1;
attaching (604) the multi-sensing visual device (100) to a housing of the battery arrangement;
measuring (606), by the multi-sensing visual device (100), a plurality of characteristics of the battery arrangement;
indicating (608), by the multi-sensing visual device (100), the measured characteristics optically.

13. Method according to claim 12, comprising further the steps:
capturing (610), by an optical device, images of the multi-sensing visual device (100), and transmitting the images of the captured monitoring blocks (102) to a processing device (508);
receiving (612), by the processing device (508), the images of the captured monitoring blocks (102), evaluating the images with respect to the characteristics of a battery monobloc (108), creating a command or signal based on the evaluation, and sending the command or signal to a controller, and
causing (614) an output action or a control action for at least one battery monobloc (108).

14. Method according to claim 12 or 13, wherein the method comprises further the step:
recording (613) battery operation history of a battery monobloc (108).

15. Use of a self-standing film, a self-standing sticker, and/or a coating layer as multi-sensing visual device for monitoring a battery arrangement.
